(19) Europäisches Patentamt / European Patent Office / Office européen des brevets

(11) **EP 2 934 953 B1**

(12) **FASCICULE DE BREVET EUROPEEN**

(45) Date de publication et mention de la délivrance du brevet:
**14.02.2018 Bulletin 2018/07**

(21) Numéro de dépôt: **13821846.6**

(22) Date de dépôt: **17.12.2013**

(51) Int Cl.:
**B60R 19/34** *(2006.01)* **B62D 21/15** *(2006.01)*
**F16F 7/12** *(2006.01)*

(86) Numéro de dépôt international:
**PCT/FR2013/000343**

(87) Numéro de publication internationale:
**WO 2014/096564 (26.06.2014 Gazette 2014/26)**

(54) **DISPOSITIF D'ABSORPTION DE CHOCS POUR LA STRUCTURE AVANT OU ARRIERE D'UN VÉHICULE**

STOSSDÄMPFUNGSVORRICHTUNG FÜR DIE VORDER- ODER HINTERSTRUKTUR EINES FAHRZEUGS

SHOCK ABSORBING APPARATUS FOR A FRONT VEHICLE STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1203516**

(43) Date de publication de la demande:
**28.10.2015 Bulletin 2015/44**

(73) Titulaires:
• **Constellium Singen GmbH**
  **78224 Singen (DE)**
• **PSA Automobiles SA**
  **78300 Poissy (FR)**

(72) Inventeurs:
• **REBUFFET, Olivier**
  **F-38000 Grenoble (FR)**
• **LANGE, Christian**
  **CH-8224 Lohningen (CH)**
• **TING, André**
  **F-92800 Puteaux (FR)**
• **KOPEC, Franck**
  **F-78000 Versailles (FR)**
• **COIFFIER, Frédéric**
  **F-91310 Leuville sur Orge (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
| | |
|---|---|
| EP-A1- 1 688 312 | WO-A1-2012/100909 |
| DE-A1- 4 224 489 | FR-A1- 2 760 708 |
| JP-A- H06 247 338 | JP-A- 2010 249 236 |
| US-A1- 2012 261 949 | US-B2- 7 354 030 |

**Description**

L'invention concerne un dispositif d'absorption de chocs pour structure avant ou arrière d'un véhicule automobile. Ladite structure avant ou arrière de véhicule comprend un brancard comportant typiquement deux longerons destinés à supporter ensemble une poutre de pare-chocs. Chaque longeron est généralement constitué d'une pièce soudée sur toute sa longueur orientée selon l'axe longitudinal du véhicule et dont l'extrémité, avant ou arrière, sert de support à ladite poutre de pare-chocs, typiquement orientée transversalement. Dans les dispositifs d'absorption de chocs concernés par l'invention, un absorbeur de chocs, également appelé "crash-box", est intercalé entre les extrémités de chaque longeron et la poutre de pare-chocs, afin de protéger la structure du brancard en cas de choc à faible vitesse. Selon les documents de l'art antérieur, le crash-box est présenté soit comme une pièce déformable et amovible de la partie avant du longeron (appelée également prolonge), soit comme une pièce déformable associée à la poutre transversale du pare-chocs pour former le dispositif d'absorption de chocs à faible vitesse, appelé également "Crash Management System" (CMS).

En pratique, lors d'un choc frontal à une vitesse inférieure à quatre kilomètres/heure, le pare-chocs et les crash-boxes se déforment dans le domaine élastique et reprennent leur position initiale sans détérioration. Lors d'un choc à une vitesse supérieure à quatre kilomètres/heure, le pare-chocs et les crash-boxes subissent une déformation plastique qui permet d'absorber au moins en partie l'énergie du choc. Lorsque le choc s'effectue à une vitesse restant inférieure à quinze kilomètres/heure environ, l'énergie ainsi absorbée permet de préserver le reste de la structure du véhicule (seuil de réparabilité). Au-delà, lors de chocs à une vitesse supérieure à quinze kilomètres/heure, la structure du brancard est endommagée et les coûts de réparation qui en découlent sont élevés.

On connaît par de nombreux documents de l'art, tels que US 6,003,930, US2004/0201254, US 6,258,465, EP 1 041 165, EP 1 688 312, US2003/0207143, US2001/0037844, des crash-box qui présentent une partie profilée allongée dans le sens longitudinal qui se déforme par pliages successifs sous l'effet de l'effort de compression généré par le choc. Ce mode de déformation, appelé "bottelage" ou "bottellement" ("progressive folding" en anglais), est le résultat d'un ensemble de micro-instabilités qui entraînent la flexion locale de la paroi de la partie profilée, laquelle se déforme plastiquement en faisant apparaître des lobes régulièrement répartis. Avantageusement, la partie profilée est un profilé extrudé, typiquement en alliage d'aluminium, dont la section est conçue de telle sorte que le bottelage puisse se produire sur toute la longueur utile de ladite partie profilée et absorbe une grande partie de l'énergie cinétique. La forme et l'épaisseur de la section du profilé, la nature de l'alliage extrudé sont étudiés pour obtenir un bottelage régulier en évitant qu'une instabilité majeure, de type flambage, conduise à la formation brutale d'une rotule (rotulage) par laquelle le profilé est rapidement plié et écrasé avant d'avoir pu absorber toute la quantité visée d'énergie cinétique.

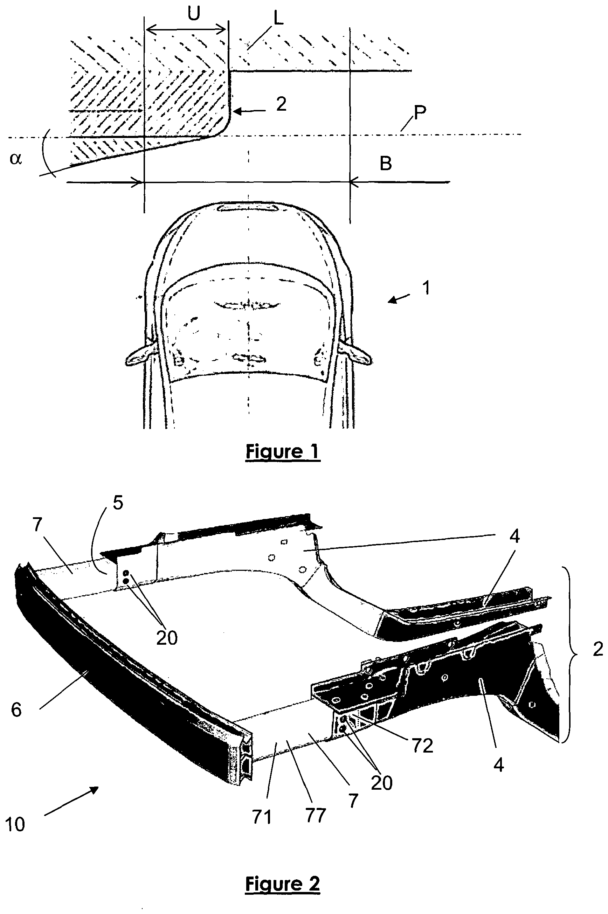

Des protocoles de "crash tests" ont été définis par les constructeurs automobiles et les assureurs afin d'améliorer les conditions de sécurité imposées aux véhicules. Initialement, ces tests simulaient des chocs frontaux, c'est-à-dire des chocs engendrant des efforts parfaitement longitudinaux. Récemment, ces "crash tests", notamment Euro-NCAP ou RCAR, suivent un protocole (cf. par exemple "RCAR Low-speed structural crash test protocol" - Issue 2.2 July 2011) dans lequel le choc n'est plus parfaitement frontal mais décalé: comme illustré sur la figure 1, le véhicule (1) soumis au test est projeté contre un mur (2) placé du côté du conducteur de telle sorte qu'il offre un obstacle sur plus de 40% de la largeur du véhicule (U > 0,4 * B) et fait un angle ($\alpha$) de 10° par rapport à la perpendiculaire (P) à l'axe longitudinal (L) du véhicule.

Les absorbeurs, ou crash-boxes, installés dans les véhicules sont relativement trapus. On définit l'élancement au sens d'Euler par $\lambda = \dfrac{L}{\rho}$, où L est la longueur de la partie soumise à compression et $\rho$ est le rayon de giration égal à $\sqrt{\dfrac{I}{S}}$, où S est l'aire de la section de la partie profilée sous compression et I est le moment quadratique par rapport au centre de gravité de ladite section ($I = \iint r^2 dx dy = Ix + Iy$). L'élancement d'Euler de la partie profilée du crash-box soumise à compression lors d'un choc est typiquement compris entre 2 et 3, de sorte que la valeur maximale de l'écrasement longitudinal du profilé dépasse rarement 2,5 fois le rayon de giration. On trouve dans la littérature japonaise de nombreux documents qui s'appuient sur des tests de compression pour comparer les performances de divers profilés en divers alliages, en imposant sur un profilé long de 200 mm une compression sur une longueur d'écrasement de 100 mm.

Les nouveaux protocoles d'essais de chocs EuroNCAP et RCAR imposent des chocs frontaux qui ne sont plus purement longitudinaux mais impliquent la présence d'efforts transversaux et de couples agissant sur l'absorbeur. Les nouvelles conditions de ces tests augmentent le risque d'instabilité élastique de type flambage et incitent à diminuer encore plus son élancement, de sorte que, à section égale, l'absorbeur doit être moins long et l'absorption d'énergie cinétique par bottelage de la partie profilée s'en trouve encore plus limitée. A longueur constante, le risque de flambage de l'absorbeur est d'autant plus faible que ses extrémités se trouvent dans des conditions proches de l'encastrement. C'est pourquoi l'extrémité du longeron (ou prolonge) est en général munie de bords transversaux et le crash-box est soudé sur une platine qui est destinée à être fixée sur lesdits bords transversaux.

La demande de brevet européen EP 1 717 107 décrit cependant un absorbeur qui présente une première extrémité destinée à la fixation de la poutre transversale du pare-chocs et une deuxième extrémité qui, au lieu d'être solidaire d'une platine transversale, est insérée à l'intérieur du longeron. Une fois insérée sur une certaine longueur, cette deuxième extrémité est fixée sur le longeron avec des moyens de fixation qui comprennent typiquement des boulons traversant les parois longitudinales en vis-à-vis du crash-box et du longeron.

La demande de brevet FR 2 892 088 propose, tout en conservant le crash-box, de séparer le longeron en deux parties: une partie avant susceptible de se déformer au cours d'un choc à vitesse supérieure à 15 kilomètres/heure (ladite vitesse pouvant atteindre typiquement 70 kilomètres/heure), et montée sur une partie arrière, plus rigide, qui n'est pas endommagée au cours de ce même choc. De la sorte, lors de chocs à vitesse supérieure à 15 km/h, seuls le crash-box et la partie avant du longeron doivent être démontés pour être remplacés. La partie avant et la partie arrière du longeron sont munies de bord transversaux de façon à ce que la partie avant puisse être fixée sur la partie arrière à l'aide de moyens de fixation amovibles traversant lesdits bords transversaux. Le document FR2760708 décrit une structure d'absorption de chocs d'après le préambule de la revendication 1.

La demanderesse a cherché à mettre au point un dispositif d'absorption de chocs pour structure avant (ou arrière) d'un véhicule automobile qui soit plus performant vis-à-vis des chocs à basse vitesse, améliore le seuil de réparabilité tout en restant simple, léger et peu coûteux à réaliser et donne de meilleurs résultats aux tests de crash à grande vitesse, tels que le test de choc frontal EURONCAP.

Un premier objet de l'invention est un dispositif d'absorption de chocs pour la structure avant ou arrière d'un véhicule qui comprend un brancard comportant deux longerons destinés à supporter ensemble une poutre de pare-chocs. En d'autre termes, il s'agit d'une structure d'absorption de chocs pour véhicule comprenant un brancard comportant deux longerons supportant ensemble une poutre de pare-chocs. Ladite structure d'absorption de chocs comprend ladite poutre de pare-chocs et un absorbeur intercalé entre chaque longeron et ladite poutre de pare-chocs. Ledit absorbeur a une partie utile destinée à se déformer lors d'un choc sous l'effet d'un effort inférieur à l'effort limite à partir duquel ledit longeron subit une déformation plastique. Ledit absorbeur est un profilé tubulaire dont une extrémité est insérée à l'intérieur de l'extrémité ouverte dudit longeron et fixée à celle-ci. Ladite structure d'absorption de chocs est caractérisée en ce que ledit absorbeur est un profilé extrudé en alliage d'aluminium dont la partie non insérée dans ledit longeron ou dans ladite poutre pare-chocs, qui correspond à ladite partie utile, a une longueur supérieure à 5 fois son rayon de giration, défini par $\sqrt{\dfrac{I}{S}}$, où I est le moment quadratique et S l'aire de la section transversale dudit profilé, ladite section transversale étant telle qu'elle présente une paroi périphérique d'épaisseur constante entourant au moins deux cavités séparées par une paroi plus mince, et que sous l'effet d'un choc sensiblement frontal, ladite partie utile est apte à se déformer par bottellement sur une longueur telle que la distance d'écrasement longitudinal est supérieure à 4 fois, de préférence 4,25 fois, de préférence encore 4,5 fois, voire 4,6 ledit rayon de giration.

En indiquant que l'absorbeur est un profil extrudé, on entend qu'il est réalisé à partir d'un profil extrudé, certaines parties de celui-ci pouvant, comme dans EP 1 717 107, être localement usinées ou déformées plastiquement. Une portion dudit profilé correspond à ladite partie utile destinée à se déformer plastiquement lors d'un choc. Ledit profilé, de par la grande aptitude à la déformation plastique du matériau qui le constitue et de par sa géométrie, plus particulièrement celle de sa section transversale, est tel que, lors d'un choc sensiblement frontal, ladite partie utile se déforme par bottellement sous l'effet d'un effort inférieur audit effort limite sur une longueur telle que la distance d'écrasement longitudinal est supérieure à 4 fois, de préférence 4,25 fois, de préférence encore 4,5 fois, voire 4,6 ledit rayon de giration. Un tel résultat peut être obtenu avec des profilés de sections transversales différentes, plus ou moins complexes selon l'alliage d'aluminium constitutif du profilé. De préférence, on choisira un alliage d'aluminium particulièrement apte à une grande déformation plastique, en particulier un alliage appartenant à la série désignée AA6xxx selon l'Aluminium Association, dans un état trempé-revenu de type T5, T6 ou T7.

De préférence, ladite partie utile présente, avant bottelage, un élancement d'Euler au moins égal à 5, de préférence 5,7, de préférence encore 6,4. En pratique, la plupart des absorbeurs destinés aux structures avant de véhicules légers ont un rayon de giration de l'ordre de 30 - 40 mm, ce qui implique que la partie utile doit avoir une longueur typiquement comprise entre 150 et 250 mm environ et botteler sur une longueur typiquement comprise entre 120 et 180 mm environ. Dans le mode de réalisation présenté plus loin, les absorbeurs ont un rayon de giration de 37 mm, présentent une longueur de partie utile de plus de 220 mm et sont aptes à botteler sur une longueur supérieure à 165 mm.

La demanderesse s'est en effet aperçu que la remarquable aptitude au bottellement de certains profilés en alliage d'aluminium permettait de concevoir des absorbeurs de chocs nettement plus élancés que dans les conceptions antérieures, de sorte que l'on peut augmenter la quantité d'énergie cinétique absorbée par la déformation de l'absorbeur, sans que l'intensité de la force générée par le choc et entraînant ledit bottellement ait été modifiée. Cette force reste donc inférieure à l'effort de tarage, à partir duquel le longeron est déformé plastiquement, de sorte que, dans le cas de structures avant de véhicules existantes, il suffit de raccourcir le longeron auquel l'absorbeur est attaché d'une longueur correspondant à l'accroissement de longueur de l'absorbeur sans avoir à modifier autrement la conception du longeron. En procédant ainsi, on augmente la vitesse critique du seuil de réparabilité. Ainsi, grâce à cette modification, la demanderesse a pu augmenter le seuil de réparabilité à une vitesse voisine de 20 km/h, nettement supérieure à la vitesse classiquement visée de 15 km/h.

Selon l'invention, la structure d'absorption de chocs est munie d'un absorbeur qui est inséré, comme dans la demande de brevet européen EP 1 717 107, à l'intérieur de l'extrémité ouverte du longeron du véhicule. L'extrémité y est insérée et fixée à l'aide de moyens de fixation qui confèrent des conditions proches de l'encastrement. On ne peut pas à proprement parler dire que l'extrémité de l'absorbeur est insérée sans jeu à l'intérieur de l'extrémité ouverte du longeron car il faut tenir compte des tolérances dimensionnelles industrielles. Pour que l'insertion des extrémités d'absorbeurs dans les extrémités ouvertes de longeron se fasse sans blocage, il faut viser un jeu aussi faible que possible mais non nul. Pour améliorer le contact entre les parois longitudinales dudit absorbeur et dudit longeron, on introduit avantageusement des inserts à l'intérieur de la cavité de l'absorbeur, qui servent d'appui lors du serrage des boulons, chaque couple de parois longitudinales du longeron et de l'absorbeur arrivant en butée contre une face desdits inserts.

La demanderesse a découvert que, même si le choc sensiblement frontal n'est pas purement longitudinal, par exemple s'il s'agit du choc décalé imposé dans le test EuroNCAP ou RCAR, l'absorbeur, qui est un profilé extrudé en alliage d'aluminium, de la série 6xxx, typiquement un 6060, un 6063, un 6005 ou encore un 6061, présente une aptitude remarquable au bottellement, à tel point que le bottellement peut s'effectuer sur une longueur significativement plus grande que les longueurs envisagées antérieurement, sans qu'une instabilité du type flambement par rotulage ne se produise. Cette aptitude est encore améliorée lorsque l'alliage est dans un état trempé - revenu de type T5, T6 ou T7, de préférence un état sous-revenu T51, T61 ou sur-revenu T73, T74 T76 ou T79 donnant une limite élastique comprise entre 95% et 70% de la limite élastique maximum pouvant être atteinte après revenu.

Bien évidemment, cet élancement de la partie utile est limité puisque, à section constante, le risque d'apparition d'instabilités telles que le flambement par rotulage augmente avec la longueur du profilé. Typiquement, pour résister à un choc décalé tel que le test EuroNCAP ou le test RCAR, la longueur de la partie utile doit rester inférieure à 10 fois ledit rayon de giration, de préférence inférieure à 8, de préférence encore inférieure à 7 fois ledit rayon de giration.

L'insertion de l'extrémité de l'absorbeur dans l'extrémité ouverte du longeron est une solution préférable à l'autre solution qui consiste à réaliser la fixation absorbeur/longeron par l'intermédiaire d'une platine vissée sur un rebord du longeron. D'une part, l'insertion permet d'alléger le dispositif en réduisant le nombre de pièces nécessaires à la liaison. D'autre part, en permettant d'éviter de souder le profilé à une platine, elle assure une meilleure stabilité et une meilleure répétitivité du comportement mécanique de l'absorbeur, car ce dernier ne présente aucune zone affectée thermiquement (ZAT) par le soudage. On a constaté en effet que les ZAT localisées dans le profilé à proximité de ladite platine, présentent un comportement mécanique différent du reste du profilé qui est susceptible de nuire à la stabilité dimensionnelle du profilé lors du bottellement.

Avantageusement, l'extrémité dudit absorbeur est insérée sur une longueur au moins égale à une, de préférence deux fois ledit rayon de giration. De préférence, les moyens de fixation sont au moins deux boulons horizontaux traversant de part en part les deux parois verticales de l'absorbeur et les deux parois verticales du longeron ainsi que l'alésage d'un insert introduit à l'intérieur de la cavité du profilé tubulaire, de façon à servir de butée et d'appui auxdites parois verticales du profilé tubulaire lors du serrage des boulons. Avantageusement, ces moyens de fixation horizontaux sont complétés par des moyens de vissage verticaux. De préférence, les deux boulons horizontaux ne sont pas disposés à la verticale l'un de l'autre mais légèrement décalés dans le sens longitudinal.

De préférence, pour faciliter l'amorçage du bottellement de la partie utile des absorbeurs lors d'un choc, en particulier lors que celui-ci est décalé, la paroi latérale extérieure desdits absorbeurs présente, au voisinage de la poutre pare-chocs, une altération localisée servant d'amorce au bottellement. Typiquement, on effectue une perforation de quelques millimètres de diamètre dans ladite paroi latérale extérieure.

D'après l'invention, le profilé tubulaire présente un contour périphérique d'épaisseur constante entourant au moins deux cavités séparées par une paroi plus mince, de préférence horizontale. Dans un mode de réalisation particulier, le profilé tubulaire présente une forme externe octogonale avec une paroi externe d'épaisseur constante qui entoure trois cavités: une cavité centrale à section rectangulaire séparée d'une cavité supérieure et d'une cavité inférieure trapézoïdales par des voiles horizontaux dont l'épaisseur est inférieure à celle de la paroi externe.

Typiquement, ledit absorbeur est un profilé extrudé dont la section présente un contour périphérique de préférence octogonal et d'épaisseur comprise entre 1,8 et 2,4 mm, au moins une cavité centrale, séparée d'une cavité supérieure et d'une cavité inférieure par des voiles horizontaux d'épaisseur comprise entre 1,4 et 1,8 mm. La surface de ladite section est comprise entre 700 et 900 mm$^2$ et le rayon de giration est compris entre 30 et 40 mm.

Un autre objet de l'invention est un véhicule automobile caractérisé en ce qu'il est muni de la structure d'absorption de chocs décrite ci-dessus.

L'exemple qui suit montre qu'en décidant d'augmenter la longueur de la partie utile de l'absorbeur susceptible de subir un bottellement sous l'effort d'un choc sensiblement frontal et en diminuant d'autant la longueur de la prolonge, la demanderesse a pu augmenter la quantité d'énergie cinétique absorbée par la déformation de l'absorbeur, sans que l'intensité de la force générée par le choc soit augmentée. Elle a pu décaler ainsi le seuil de réparabilité à une vitesse notablement supérieure à 15 km/h, voisine de 20 km/h. Un autre avantage appréciable apportée par l'invention est, du fait de la plus grande part de l'énergie cinétique absorbée par les absorbeurs, une diminution de près de 15% de l'intrusion au niveau du tablier.

La figure 1 représente une vue de dessus représentant les conditions d'essais relatives à un test de choc sensiblement frontal, décalé (figure tirée de "RCAR Low-speed structural crash test protocol (Appendix I)").

La figure 2 représente une vue en perspective d'une structure avant de véhicule munie d'un dispositif d'absorption de chocs selon l'invention.

La figure 3a représente la section de l'absorbeur du dispositif d'absorption de chocs de la figure 2. La figure 3b représente la section de l'insert employé lors de la fixation de l'absorbeur sur le longeron.

La figure 4 illustre l'évolution de l'effort de compression au cours de l'écrasement longitudinal de l'absorbeur de la structure d'absorption de chocs de la figure 2.

La figure 5 représente une vue en perspective d'une structure avant de véhicule munie d'un dispositif d'absorption de chocs selon l'art antérieur.

La figure 6 illustre les résultats comparés des simulations numériques du crash test tel qu'illustré en figure 1 sur une structure avant de véhicule munie du dispositif d'absorption de chocs de la figure 2 et sur une structure avant de véhicule munie du dispositif d'absorption de chocs de la figure 5.

La figure 7a représente une vue de dessus d'une structure avant de véhicule munie d'un autre dispositif d'absorption de chocs selon l'invention. La figure 7b représente la section de l'absorbeur de ce dispositif d'absorption de chocs. La figure 8 illustre l'évolution de l'effort de compression au cours de l'écrasement longitudinal dudit absorbeur ainsi que l'énergie de déformation absorbée.

## MODES DE REALISATION DE L'INVENTION

### EXEMPLE 1

La structure avant de véhicule illustrée en figure 2 comprend un mode de réalisation particulier de la structure d'absorption de chocs (10) selon l'invention. Elle comprend un brancard (2) comportant deux longerons (4) qui supportent ensemble une poutre de pare-chocs (6). La structure d'absorption de chocs ou CMS résulte de l'assemblage de ladite poutre de pare-chocs et de deux absorbeurs (7). Elle est positionnée sur la structure avant du véhicule de telle sorte que chaque absorbeur se trouve intercalé entre un longeron et ladite poutre de pare-chocs.

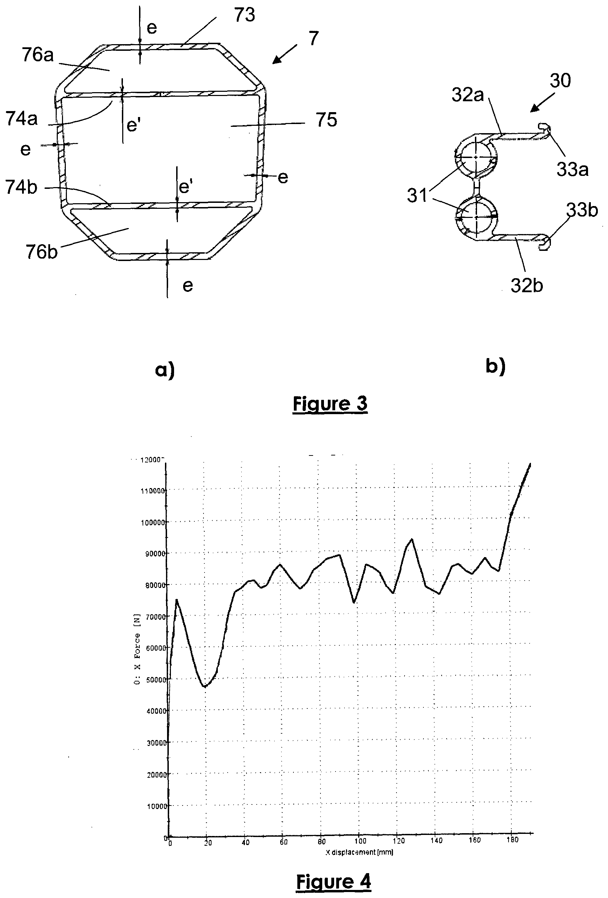

L'absorbeur est un profilé dont une extrémité est solidaire de la poutre pare-chocs et l'autre extrémité (72) est insérée à l'intérieur de l'extrémité ouverte du longeron (4). Le profilé présente une partie, que nous appellerons par la suite "partie utile" (71), non insérée dans ledit longeron ou dans ladite poutre pare-chocs qui est destinée à botteler sous l'effet d'un choc sensiblement frontal. La section du profilé est illustré en figure 3a). Sa superficie est de 784 mm$^2$, son moment quadratique de 106,6 cm$^4$ environ. Son rayon de giration $\rho$ est voisin de 36,9 mm. L'absorbeur est en 6060 T6. La longueur de la partie utile est de 236 mm, l'élancement

$$\lambda = \frac{L}{\rho},$$ est donc voisin de 6,4. Avec une telle géométrie, la partie utile de l'absorbeur peut se déformer par bottellement lors d'un choc sur une longueur de près de 170 mm, soit environ 4,6 fois le rayon de giration.

On peut voir en figure 4 que, lors du bottellement, l'évolution de l'effort de compression au cours d'un choc à grande vitesse. Un premier pic est atteint au moment de l'initiation du bottellement, c'est-à-dire de la formation du premier pli. Ce pic est en général plus élevé que les suivants si l'on n'aide pas la formation du premier pli. En créant une altération locale de la paroi latérale extérieure (77) de l'absorbeur, à proximité de son attache avec la poutre pare-chocs, ici un trou circulaire traversant ladite paroi latérale (non visible sur la figure 2), on facilite l'initiation du bottellement et le premier pic ne dépasse pas 75 kN. Ensuite, au fur et à mesure de la formation des lobes suivants, l'effort de compression oscille en restant compris entre 75 kN et un peu plus de 90 kN, c'est-à-dire en restant inférieur à l'effort de tarage (ici 100 kN), qui est l'effort limite à partir duquel ledit longeron subit une déformation plastique. Une fois la longueur d'écrasement atteinte (ici, un peu plus de 170 mm), l'absorbeur ne peut plus absorber d'énergie cinétique, et c'est la structure support sur laquelle l'absorbeur est fixé, en particulier le longeron, qui prend le relais en subissant un effort de compression qui augmente fortement.

L'absorbeur (7) est ici un profilé extrudé dont la section présente une forme externe octogonale, proche de la forme circulaire, avec une paroi périphérique (73) d'épaisseur e constante, de l'ordre de 2,1 mm, qui entoure trois cavités: une cavité centrale (75) à section rectangulaire, une cavité supérieure (76a) et une cavité inférieure (76b). Les dites cavités supérieure et inférieure présentent une forme trapézoïdale et sont séparées de ladite cavité centrale par des voiles horizontaux (74a, 74b) dont l'épaisseur e' est de l'ordre de 1,7 mm.

L'extrémité (72) de l'absorbeur (7) est insérée à l'intérieur de l'extrémité ouverte (5) du longeron (4). Après insertion, ladite extrémité (72) est fixée à celle-ci à l'aide de boulons horizontaux (20) qui traversent de part en par le longeron et l'absorbeur. Bien évidemment, les tolérances dimensionnelles industrielles font que, pour l'insertion des extrémités d'absorbeurs dans les extrémités ouvertes de longeron se fassent sans blocage, il faut viser un jeu aussi faible que possible mais non nul. Pour assurer les conditions les plus proches possibles de l'encastrement, l'extrémité (72) de l'absorbeur (7) est également munie d'inserts (30) dont les faces d'extrémité sont destinées à servir d'appuis aux faces internes des parois verticales du profilé tubulaire. Avantageusement, lesdits inserts ont une longueur légèrement inférieure à la distance existant entre les parois verticales internes de la cavité centrale et sont munis d'alésages (31) au travers desquels passent lesdits boulons. Pour que chaque insert puisse être maintenu en place sur l'extrémité (72) de l'absorbeur (7), celui-ci présente deux pattes (32a, 32b) qui sont orientées parallèlement aux voiles horizontaux (74a, 74b) du profilé et qui sont recourbées à leur extrémité (33a, 33b). L'insert est introduit à l'intérieur de la cavité centrale et enfoncé jusqu'à ce que les extrémités recourbées des pattes viennent en butée contre les voiles internes horizontaux (74a, 74b). La longueur des pattes (32a, 32b), la position des orifices ménagés sur le longeron destinés au passage desdits boulons assurent l'insertion de l'extrémité de l'absorbeur sur environ 50 mm. La fixation est complétée par l'emploi de vis verticales non traversantes (non illustrées).

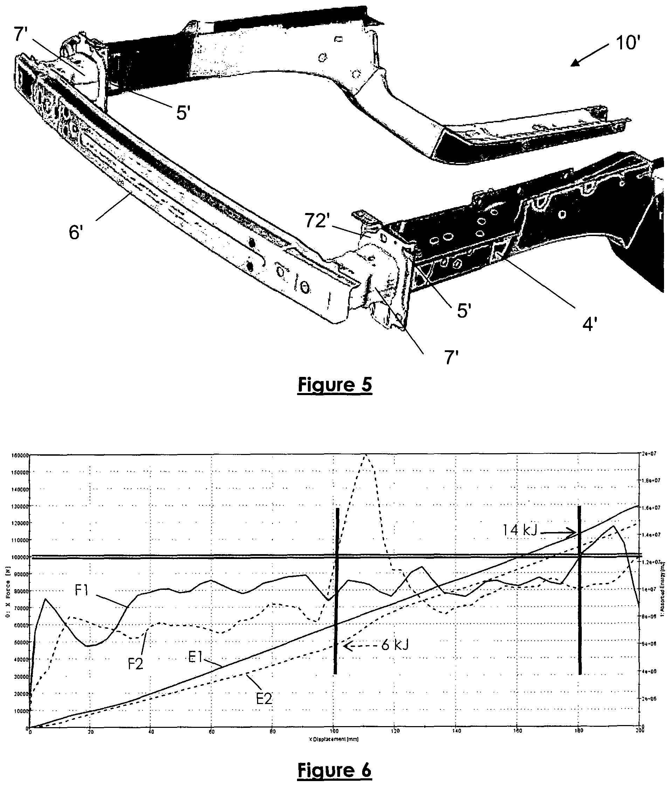

La structure d'absorption de chocs (10) selon l'invention a été comparée à une structure d'absorption de chocs (10') de l'art antérieur, illustrée en figure 5. Celle-ci est destinée à être placée sur un brancard de même dimension, dont les deux longerons (4') supportent une poutre de pare-chocs (6') en acier. Des absorbeurs en acier se trouvent intercalés entre un longeron (4') et ladite poutre de pare-chocs.

L'absorbeur (7') est muni d'une platine (72') fixée sur un bord transversal (5') de l'extrémité du longeron (4'). L'absorbeur en acier (7') est moins long que l'absorbeur (7) en alliage d'aluminium utilisé dans le cadre de l'invention de sorte que, pour un même encombrement du véhicule, le longeron (4') de la structure de l'art antérieur a une longueur plus grande que le longeron (4) apte à recevoir la structure d'absorption de chocs selon l'invention.

La figure 6 représente les efforts de compression F1 et F2 générés lors d'un choc et les énergies E1 et E2 absorbées. Les courbes F1 et E1 correspondent à la structure d'absorption de chocs décrite dans l'exemple et illustrée en figure 2. Les courbes F2 et E2 correspondent à la structure d'absorption de chocs de l'art antérieur illustrée en figure 5. On voit que l'effort de tarage de 100 kN est dépassé dès que l'écrasement atteint 100 mm dans la solution de référence, alors qu'il n'est atteint qu'après un écrasement longitudinal de près de 180 mm dans la solution proposée par l'invention. L'énergie cinétique absorbée dans le premier cas est de 6 kJ et dans le second cas de près de 14 kJ. Un tel gain en absorption d'énergie permet de reporter le seuil de réparabilité de 15 km/h à une vitesse lors du choc voisine de 20 km/h.

De plus, la solution apportée par l'invention présente l'avantage d'être plus simple (moins de pièces à assembler) et d'être plus légère (3,1 kg épargnés).

## EXEMPLE 2

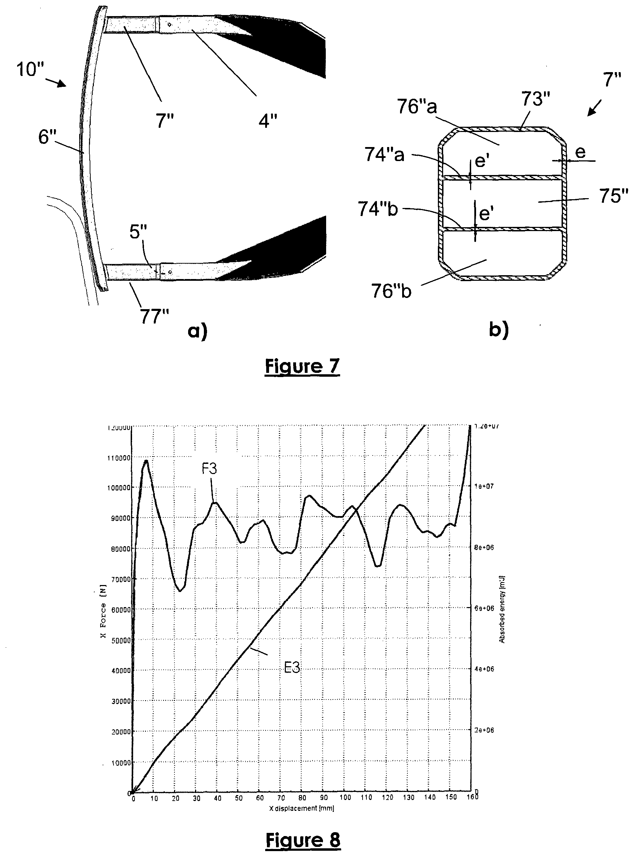

La structure avant (10") de véhicule illustrée en figure 7a comprend un autre mode de réalisation de la structure d'absorption de chocs selon l'invention. L'absorbeur (7") est un profilé dont une extrémité est solidaire de la poutre pare-chocs (6") et l'autre extrémité est insérée à l'intérieur de l'extrémité (5") ouverte du longeron (4").

La section du profilé est illustrée en figure 7b. Sa superficie est de 743 mm$^2$, son moment quadratique de 90.1 cm$^4$ environ. Son rayon de giration $\rho$ est voisin de 34,8 mm. L'absorbeur est en 6060 T6. La longueur de la partie utile est de 200 mm, l'élancement est donc voisin de 5,7. Avec une telle géométrie, la partie utile de l'absorbeur peut se déformer par bottellement lors d'un choc sur une longueur de près de 155 mm, soit environ 4,5 fois le rayon de giration.

Les conditions de fixation de l'absorbeur (7") sur l'extrémité ouverte (5") du longeron (4") sont semblables à celles décrites dans l'exemple précédent. La structure du brancard 2", différente de la précédente, est telle que les longerons supportent un effort de 110 kN sans se déformer plastiquement. Il s'en suit un effort de tarage supérieur, de sorte que la force de compression lors du bottellement peut être un peu plus élevée que dans l'exemple précédent.

Comme dans l'exemple précédent, la section du profilé est octogonale mais moins proche de la forme circulaire, ledit profilé étant, pour des raisons d'encombrement, plus haut que large. Les épaisseurs de la paroi périphérique (73") et des voiles internes (74a", 74b") sont identiques à celles de l'exemple précédent. Les cavités (ou chambres) supérieure (76a") et inférieure (76b") ne sont plus trapézoïdales comme dans l'exemple précédent. La cavité supérieure (76a") est symétrique de la cavité inférieure (76b") par rapport au plan horizontal passant par l'axe du profilé. Deux chanfreins permettent d'éviter la présence d'angles droits à la distance maximale dudit plan horizontal passant par l'axe du profilé, lesquels rigidifieraient localement la section dudit profilé et rendraient le bottelage moins stable. Les cavités supérieure (76a") et inférieure (76b") se distinguent aussi de l'exemple précédent en ce que leurs surfaces sont plus équilibrées par rapport à celle de la cavité centrale (75") rectangulaire, puisqu'elles sont ici sensiblement égales, alors que le rapport de la surface de la cavité centrale (75) à celle des cavités supérieure ou inférieure (76a, 76b) dans l'exemple précédent était de l'ordre de 3. Ici, la surface de chacune des trois cavités est voisine de 1375 mm². Ainsi, la forme de la section de ce profilé permet, malgré une surface plus faible, d'obtenir le bottellement sous un effort de compression plus intense.

La figure 8 illustre l'évolution de l'effort de compression au cours de l'écrasement longitudinal dudit absorbeur ainsi que l'énergie de déformation absorbée: ici, on observe que la force passe par un pic proche de 109 kN au début du bottellement puis oscille autour de 90 kN environ. Cet absorbeur est également muni sur sa paroi latérale extérieure à proximité de son attache avec la poutre pare-chocs d'un orifice circulaire traversant ladite paroi latérale, ce qui facilite l'initiation du bottellement mais n'empêche pas ici le passage de l'effort de compression par un pic, probablement en raison de la forme moins proche de la forme circulaire de sa section.

En fin d'écrasement longitudinal (vers 155 mm), l'effort de compression (F3) augmente fortement si l'énergie cinétique n'est pas encore totalement absorbée. Lorsque cet effort atteint la force de tarage de 110 kN, l'énergie (E3) absorbée par ledit absorbeur de chocs est de 12,8 kJ.

On dispose avec ce deuxième exemple d'un absorbeur de chocs encore plus léger qui absorbe presque autant d'énergie cinétique que l'absorbeur du premier exemple.

## Revendications

1. Structure d'absorption de chocs (10) pour véhicule, la structure comprenant deux longerons (4) qui supportent ensemble une poutre de pare-chocs (6), et un absorbeur (7,7") intercalé entre chaque longeron et ladite poutre de pare-chocs, ledit absorbeur ayant une partie utile (71) destinée à se déformer lors d'un choc sous l'effet d'un effort inférieur à l'effort limite à partir duquel ledit longeron subit une déformation plastique, ledit absorbeur étant un profilé dont une extrémité (72) est insérée à l'intérieur de l'extrémité ouverte (5,5") dudit longeron et fixée à celle-ci, où ledit absorbeur est un profilé extrudé en alliage d'aluminium, **caractérisée en ce que** la partie du profilé non insérée dans ledit longeron ou dans ladite poutre pare-chocs, qui correspond à ladite partie utile, a une longueur supérieure à 5 fois son rayon de giration, défini par $\sqrt{\dfrac{I}{S}}$, où I est le moment quadratique et S l'aire de la section transversale dudit profilé, ladite section transversale étant telle qu'elle présente une paroi périphérique (73, 73") d'épaisseur constante entourant au moins deux cavités (75, 76a, 76b, 75", 76a", 76b") séparées par une paroi plus mince (74a, 74b, 74a", 74b"), et que sous l'effet d'un choc sensiblement frontal, ladite partie utile est apte à se déformer par bottellement sur une longueur telle que la distance d'écrasement longitudinal est supérieure à 4 fois ledit rayon de giration.

2. Structure d'absorption de chocs selon la revendication 1, **caractérisée en ce que** ladite partie utile présente un élancement tel que l'écrasement longitudinal est supérieur à 4,25 , de préférence 4,5 fois ledit rayon de giration.

3. Structure d'absorption de chocs selon la revendication 1 ou 2, **caractérisée en ce que** ladite partie utile présente, avant bottelage, une longueur au moins égal à 5,7 fois ledit rayon de giration, de préférence au moins égal à 6,4 fois ledit rayon de giration.

4. Structure d'absorption de chocs selon l'une quelconque des revendications 1 à 3 **caractérisée en ce que** ladite partie utile présente, avant bottelage, une longueur inférieure à 10, de préférence 8 fois ledit rayon de giration.

5. Structure d'absorption de chocs selon des revendications 1 à 4, dans lequel ledit choc sensiblement frontal est un choc où le véhicule (1) soumis au test est projeté contre un mur (2) placé du côté du conducteur de telle sorte qu'il offre un obstacle sur plus de 40% de la largeur du véhicule (U > 0,4 * B) et fait un angle (α) de 10° par rapport à la perpendiculaire (P) à l'axe longitudinal (L) du véhicule.

6. Structure d'absorption de chocs selon l'une quelconque des revendications 1 à 5, **caractérisée en ce que** la paroi latérale extérieure (77,77") desdits absorbeurs présente, au voisinage de la poutre pare-chocs, une altération localisée servant d'amorce au bottellement.

7. Structure d'absorption de chocs selon l'une quelconque des revendications 1 à 6, **caractérisée en ce que** l'extrémité (72) dudit absorbeur est insérée dans ladite extrémité ouverte du longeron (5, 5") sur une longueur au moins égale à une fois ledit rayon de giration.

8. Structure d'absorption de chocs selon l'une quelconque des revendications 1 à 7, dans laquelle ledit absorbeur est en un alliage de la série 6xxx, typiquement un 6060, un 6063, un 6005 ou encore un 6061, dans un état trempé - revenu de type T5, T6 ou T7, de préférence un état sous-revenu T51, T61 ou surrevenu T73, T74 T76 ou T79 donnant une limite élastique comprise entre 95% et 70% de la limite élastique maximum pouvant être atteinte après revenu.

9. Structure d'absorption de chocs selon l'une quelconque des revendications 1 à 8 dans laquelle le profilé tubulaire présente une forme externe octogonale avec une paroi périphérique (73, 73") d'épaisseur constante qui entoure trois cavités: une cavité centrale (75, 75") à section rectangulaire séparée d'une cavité supérieure (76a, 76a") et d'une cavité inférieure (76b, 76b") par des voiles horizontaux (74a, 74b; 74a", 74b") dont l'épaisseur est inférieure à celle de la paroi externe.

10. Structure d'absorption de chocs selon l'une une quelconque des revendications 1 à 9, dans laquelle les surfaces de ladite cavité centrale (75"), de ladite cavité supérieure (76a") et de ladite cavité inférieure (76b") sont sensiblement égales.

11. Structure d'absorption de chocs selon l'une quelconque des revendications 1 à 10, dans laquelle ledit absorbeur est un profilé extrudé dont la section présente une paroi périphérique (73, 73") d'épaisseur comprise entre 1,8 et 2,4 mm, au moins une cavité centrale (75, 75"), séparée d'une cavité supérieure (76a, 76a") et d'une cavité inférieure (76b, 76b") par des voiles horizontaux (74a, 74b; 74a", 74b") d'épaisseur comprise entre 1,4 et 1,8 mm, la surface de ladite section étant comprise entre 700 et 900 mm$^2$, et le rayon de giration étant compris entre 30 et 40 mm.

12. Véhicule automobile **caractérisé en ce qu'**il est muni d'une structure d'absorption de chocs selon l'une quelconque des revendications 1 à 11.

**Patentansprüche**

1. Stoßabsorbierende Struktur (10) für Fahrzeuge, wobei die Struktur zwei Längsträger (4), welche zusammen einen Stoßfängerträger (6) tragen, und einen Absorber (7, 7") umfasst, welcher zwischen jedem der Längsträger (6) und dem Stoßfängerträger (6) angeordnet ist, wobei der Absorber einen nutzbaren Abschnitt (71) aufweist, der sich bei einem Stoß unter der Einwirkung einer Kraft verformt, die geringer ist als die Grenzkraft, ab der der Längsträger eine plastische Verformung erfährt, wobei der Absorber ein Profil ist, dessen eines Ende (72) in das offene Ende (5, 5") des Längsträgers eingesteckt und daran befestigt ist, wobei der Absorber ein Strangpressprofil aus Aluminiumlegierung ist, **dadurch gekennzeichnet, dass** der nicht in den Längsträger oder in den Stoßfängerträger eingesteckte Abschnitt des Profils, der dem nutzbaren Abschnitt entspricht, eine Länge hat, die mehr als das 5 fache seines Trägheitsradius beträgt, definiert durch $\sqrt{\dfrac{I}{S}}$, worin I das Flächenträgheitsmoment und S die Querschnittsfläche des Profils ist, wobei der Querschnitt so ausgelegt ist, dass er eine umlaufende Wand (73, 73") konstanter Dicke aufweist, die mindestens zwei, durch eine dünnere Wand (74a, 74b, 74a", 74b") voneinander getrennte Hohlräume (75, 76a, 76b, 75", 76a", 76b") umschließt, und dass sich der nutzbare Abschnitt unter der Einwirkung eines im Wesentlichen frontalen Aufpralls durch progressive Faltung über eine Länge verformt, die so bemessen ist, dass der Weg der Längsstauchung mehr als das 4fache des Trägheitsradius beträgt.

2. Stoßabsorbierende Struktur nach Anspruch 1, **dadurch gekennzeichnet, dass** der nutzbare Abschnitt ein Längenverhältnis aufweist, das so bemessen ist, dass die Längsstauchung mehr als das 4,25fache, vorzugsweise das 4,5fache des Trägheitsradius beträgt.

3. Stoßabsorbierende Struktur nach Anspruch 1 oder 2, **dadurch gekennzeichnet, dass** der nutzbare Abschnitt vor der Faltung eine Länge aufweist, die mindestens das 5,7fache des Trägheitsradius, vorzugsweise mindestens das 6,4fache des Trägheitsradius beträgt.

4. Stoßabsorbierende Struktur nach irgendeinem der Ansprüche 1 bis 3, **dadurch gekennzeichnet, dass** der nutzbare Abschnitt vor der Faltung eine Länge aufweist, die weniger als das 10fache, vorzugsweise das 8fache des Trägheitsradius beträgt.

5. Stoßabsorbierende Struktur nach irgendeinem der Ansprüche 1 bis 4, wobei der im Wesentlichen frontale Aufprall ein Aufprall ist, bei dem das getestete Fahrzeug (1) gegen eine Mauer (2) geschleudert wird, die so auf der Seite des Fahrers angeordnet ist, dass sie über mindestens 40 % der Breite des Fahrzeugs (U > 0,4 * B) ein Hindernis bildet und einen Winkel ($\alpha$) von 10° gegenüber der Senkrechten (P) zur Längsachse (L) des Fahrzeugs einschließt.

6. Stoßabsorbierende Struktur nach irgendeinem der Ansprüche 1 bis 5, **dadurch gekennzeichnet, dass** die äußere Seitenwand (77, 77") der Absorber in der Nähe des Stoßfängerträgers eine lokalisierte Veränderung aufweist, die als Faltungsansatz dient.

7. Stoßabsorbierende Struktur nach irgendeinem der Ansprüche 1 bis 6, **dadurch gekennzeichnet, dass** das Ende (72) des Absorbers über eine Länge, die mindestens das 1fache des Trägheitsradius beträgt, in das offene Ende des Längsträgers (5, 5") eingesteckt ist.

8. Stoßabsorbierende Struktur nach irgendeinem der Ansprüche 1 bis 7, wobei der Absorber aus einer Legierung der Serie 6xxx, typischerweise einer Legierung 6060, 6063, 6005 oder 6061, in einem abgeschreckten und warmausgelagerten Zustand vom Typ T5, T6 oder T7, vorzugsweise einem unteralterten Zustand T51, T61 oder überalterten Zustand T73, T74 T76 oder T79, besteht, der eine Dehngrenze herbeiführt, die zwischen 95% und 70% der maximalen Dehngrenze beträgt, die nach der Warmauslagerung erreicht werden kann.

9. Stoßabsorbierende Struktur nach irgendeinem der Ansprüche 1 bis 8, wobei das rohrförmige Profil eine achteckige äußere Form mit einer umlaufenden Wand (73, 73") konstanter Dicke aufweist, welche drei Hohlräume umschließt: einen mittigen Hohlraum (75, 75") mit rechteckigem Querschnitt, der von einem oberen Hohlraum (76a, 76a") und einem unteren Hohlraum (76b, 76b") durch horizontale Wände (74a, 74b; 74a", 74b") getrennt ist, deren Dicke geringer ist als die Dicke der Außenwand.

10. Stoßabsorbierende Struktur nach irgendeinem der Ansprüche 1 bis 9, wobei die Flächen des mittigen Hohlraums (75"), des oberen Hohlraums (76a") und des unteren Hohlraums (76b") im Wesentlichen gleich sind.

11. Stoßabsorbierende Struktur nach irgendeinem der Ansprüche 1 bis 10, wobei der Absorber ein Strangpressprofil ist, dessen Querschnitt eine umlaufende Wand (73, 73") mit einer Dicke zwischen 1,8 und 2,4 mm und mindestens einen mittigen Hohlraum (75, 75") aufweist, der von einem oberen Hohlraum (76a, 76a") und einem unteren Hohlraum (76b, 76b") durch horizontale Wände (74a, 74b; 74a", 74b") mit einer Dicke zwischen 1,4 und 1,8 mm getrennt ist, wobei die Querschnittsfläche zwischen 700 und 900 mm$^2$ und der Trägheitsradius zwischen 30 und 40 mm beträgt.

12. Kraftfahrzeug, **dadurch gekennzeichnet, dass** es mit einer stoßabsorbierenden Struktur nach irgendeinem der Ansprüche 1 bis 11 ausgerüstet ist.

## Claims

1. Structure for absorbing impacts (10) for a vehicle, the structure comprising two spars (4) which together support a bumper beam (6), and an absorber (7, 7'') inserted between each spar and said bumper beam, said absorber having a useful part (71) intended to be deformed during an impact under the effect of a force less than the threshold force from which said spar suffers a plastic deformation, said absorber being a profile of which an end (72) is inserted inside the open end (5, 5") of said spar and attached to it, where said absorber is an aluminium alloy extruded profile, **characterised in that** the part of the profile not inserted in said spar of in said bumper beam, which corresponds to said useful part, has a length of more than 5 times the radius of gyration thereof, defined by $\sqrt{\dfrac{I}{S}}$, where I is the moment of inertia and S is the area of the cross-section of said profile, said cross-section being such that it has a peripheral wall (73, 73") of constant thickness surrounding at least two cavities (75, 76a, 76b, 75", 76a", 76b") separated by a thinner wall (74a, 74b, 74a'', 74b"), and that under the effect of a substantially frontal impact, said useful part is able to be deformed by baling over a length such that the longitudinal flattening distance is more than 4 times said radius of gyration.

2. Structure for absorbing impacts according to claim 1, **characterised in that** said useful part has a support distance such as the longitudinal flattening is more than 4.25, preferably 4.5 times said radius of gyration.

3. Structure for absorbing impacts according to claim 1 or 2, **characterised in that** said useful part has, before baling, a length at least equal to 5.7 times said radius of gyration, preferably at least equal to 6.4 times said radius of gyration.

4. Structure for absorbing impacts according to any one of claims 1 to 3, **characterised in that** said useful part has, before baling, a length less than 10, preferably 8 times said radius of gyration.

5. Structure for absorbing impacts according to claims 1 to 4, wherein said substantially frontal impact is an impact where the vehicle (1) subjected to the test is projected against a wall (2) positioned on the driver's side, such that it offers an obstacle over more than 40% of the width of the vehicle (U > 0.4 * B) and makes an angle ($\alpha$) of 10° in relation to the perpendicular (P) to the longitudinal axis (L) of the vehicle.

6. Structure for absorbing impacts according to any one of claims 1 to 5, **characterised in that** the exterior lateral wall (77, 77") of said absorbers has, near the bumper beam, a localised alteration serving as an initiation to the baling.

7. Structure for absorbing impacts according to any one of claims 1 to 6, **characterised in that** the end (72) of said absorber is inserted in said open end of the spar (5, 5") over a length at least equal to one time said radius of gyration.

8. Structure for absorbing impacts according to any one of claims 1 to 7, wherein said absorber is an alloy of the series 6xxx, typically a 6060, a 6063, a 6005, or a 6061, in a quenched and tempered state of type T5, T6 or T7, preferably an under-tempered state T51, T61 or over-tempered T73, T74, T76 or T79 giving an elastic limit of between 95% and 70% of the maximum elastic limit which could be reached after being tempered.

9. Structure for absorbing impacts according to any one of claims 1 to 8, wherein the tubular profile has an external octagonal form with a peripheral wall (73, 73") of constant thickness which surrounds three cavities: a central cavity (75, 75") with a rectangular section, separated from an upper cavity (76a, 76a") and a lower cavity (76b, 76b") by horizontal edges (74a, 74b, 74a'', 74b") of which the thickness is less than that of the external wall.

10. Structure for absorbing impacts according to any one of claims 1 to 9, wherein the surfaces of said central cavity (75"), of said upper cavity (76a") and of said lower cavity (76b") are substantially equal.

11. Structure for absorbing impacts according to any one of claims 1 to 10, wherein said absorber is an extruded profile, of which the section has a peripheral wall (73, 73") of a thickness of between 1.8 and 2.4mm, at least one central cavity (75, 75"), separated from an upper cavity (76a, 76a") and a lower cavity (76b, 76b") by horizontal edges (74a, 74b, 74a", 74b") of a thickness of between 1.4 and 1.8mm, the surface of said section being between 700 and 900mm$^2$, and the radius of gyration being between 30 and 40mm.

12. Automotive vehicle, **characterised in that** it is equipped with a structure for absorbing impacts according to any one of claims 1 to 11.

**Figure 1**

**Figure 2**

a)

b)

**Figure 3**

**Figure 4**

**Figure 5**

**Figure 6**

**Figure 7**

**Figure 8**

## RÉFÉRENCES CITÉES DANS LA DESCRIPTION

**Documents brevets cités dans la description**

- US 6003930 A
- US 20040201254 A
- US 6258465 B
- EP 1041165 A
- EP 1688312 A
- US 20030207143 A
- US 20010037844 A
- EP 1717107 A
- FR 2892088
- FR 2760708

**Littérature non-brevet citée dans la description**

- *RCAR Low-speed structural crash test protocol,* 02 Juillet 2011